# EUROPÄISCHE PATENTSCHRIFT

(11) **EP 3 093 060 B1**
(45) Veröffentlichungstag und Bekanntmachung des Hinweises auf die Patenterteilung: **22.05.2019**
(21) Anmeldenummer: 16165299.5
(22) Anmeldetag: 14.04.2016
(51) Int. Cl.: B01D 46/10

(54) **FILTER ZUM EINSETZEN IN EINE ROHRLEITUNG**
FILTER FOR FITTING INTO A CONDUIT
FILTRE DESTINE A L'UTILISATION DANS UNE CONDUITE

(30) Priorität: 22.04.2015 DE 102015106190; 21.01.2016 DE 102016101015
(43) Veröffentlichungstag der Anmeldung: 16.11.2016
(73) Patentinhaber: Witzenmann GmbH, 75175 Pforzheim (DE)
(72) Erfinder: Ehrenberger, David, 75038 Oberderdingen (DE); Kunzmann, Thomas, 75180 Pforzheim (DE); Reuß, Sebastian, 76337 Waldbronn (DE)
(74) Vertreter: Lemcke, Brommer & Partner Patentanwälte Partnerschaft mbB

(56) Entgegenhaltungen:
- DE-A1-102012 208 072
- DE-A1-102014 111 103
- GB-A- 456 468
- US-A- 3 204 391

## Beschreibung

Die Erfindung betrifft ein Filter zum Einsetzen in eine Rohrleitung nach dem Oberbegriff des Anspruchs 1. Ein solches Filter umfasst einen Rohrstutzen, eine in einem Endbereich des Rohrstutzens angeordnete und von dem Rohrstutzen wenigstens teilweise umschlossene Fixierkomponente und ein Filterelement, das einen Fixierbereich aufweist, in dem es zwischen dem Rohrstutzen (außen) und der Fixierkomponente (innen) fixiert ist. Außerhalb des Fixierbereichs ist zwischen dem Filterelement und dem Rohrstutzen ein Luftspalt angeordnet.

Außerdem betrifft die Erfindung ein Verfahren zum Einsetzen eines Filterelementes in eine Rohrleitung nach dem Oberbegriff des Anspruchs 11.

Filter dieser Art sind aus der DE 10 2011 085 800 A1 oder der EP 2 589 423 A1 bekannt. Die dort offenbarten Filter weisen flächige Filterelemente bzw. Filtergewebe auf, die eine Rohröffnung des Rohrstutzens überdecken und um einen Endbereich des Rohrstutzens herum nach hinten umgelegt sind. Eine Hülse dient dabei der Fixierung des Filterelementes in dem Endbereich des Rohrstutzens.

Speziell in der EP 2 589 423 A1 ist ein Filter mit einem Rohrstutzen beschrieben, der an einem Endbereich radial nach innen gebogen ist und an dem das Filterelement über dessen gesamten Umfang flächig-durchgängig anliegt. Die Hülse ist in dem Endbereich ebenfalls nach innen gebogen, wobei sie das Filterelement flächig-durchgängig gegen den Endbereich des Rohrstutzens presst.

Ein bevorzugtes Anwendungsgebiet eines Filters in der vorliegenden Art betrifft eine gasführende Rohrleitung im Abgasstrang eines Kfz-Verbrennungsmotors. Speziell wird diese Art von Filter zur Filterung von Keramik- oder Metallpartikeln zum Schutz nachgeschalteter Bauteile in Abgasrückführleitungen verwendet. Dort kommt es durch das Abgas je nach Lastzustand des Verbrennungsmotors regelmäßig zu erheblichen Temperaturschwankungen im Inneren der Rohrleitung. Das Filter umfasst ein Filterelement aus einem vergleichsweise dünnwandigen Metallgewebe oder dergleichen mit relativ geringer Masse, weswegen es seine Temperatur vergleichsweise schnell mit der Abgastemperatur ändert, verglichen mit den anderen Bestandteilen des Filters. Diese Temperaturänderungen führen beim Erwärmen zu einem Ausdehnen und beim Abkühlen zu einem Zusammenziehen des Filtermaterials.

Gemäß dem Stand der Technik ist das Filterelement großflächig zwischen dem Rohrstutzen und der Hülse fest eingespannt. Dadurch kann das Filterelement bereits beim Einspannen bei der Montage des Filters beschädigt werden. Zusätzlich hat das Filterelement aufgrund der flächigen Einspannung nicht ausreichend die Möglichkeit, sich im Zuge der Temperaturänderungen auszudehnen oder zusammenzuziehen. Hierdurch kann es zu einem Wellenaufwurf des Filterelementes und im weiteren Verlauf zu einer Ausbildung von Rissen in dem Filterelement kommen. Dadurch kann das Filter in seiner Funktionalität und seiner Standzeit beeinträchtigt werden.

In der DE 10 2012 208 072 A1 ist ein Filterelement mit einem Filtergehäuse und einem in dem Filtergehäuse angeordneten Filter offenbart.

Die GB 456 468 A zeigt ein Luft- oder Gasfilter, das eine Kombination aus einer konischen Matte aus einem Drahtgeflecht und einer perforierten Anlagestruktur für die Matte umfasst.

Die US 3 204 391 A offenbart ein Filter zur Trennung von mitgeführten Partikeln eines Luftstroms mit einem hohlen Außenteil, einem hohlen Innenteil und Verbindungsmitteln zum Verbinden von Außenteil und Innenteil.

In der DE 10 2014 111 103 A1 ist eine Filtervorrichtung gezeigt, bei der ein Filtergewebe mit einem Metallring als Rahmen durch eine im Wesentlichen ringförmig geschlossene Einfassung verbunden ist.

Der vorliegenden Erfindung liegt die Aufgabe zugrunde, einen Filter zum Einsetzen in eine Rohrleitung der eingangs genannten Art anzugeben, das sich gegenüber dem Stand der Technik durch eine höhere Lebensdauer und eine größere Ausfallsicherheit auszeichnet.

Gelöst wird die Aufgabe durch ein Filter mit den Merkmalen des Anspruchs 1 sowie durch ein Verfahren mit den Merkmalen des Anspruchs 11.

Erfindungsgemäß ist ein Filter zum Einsetzen in eine Rohrleitung, umfassend: einen Rohrstutzen; eine in einem Endbereich des Rohrstutzens angeordnete und von dem Rohrstutzen wenigstens teilweise umschlossene Fixierkomponente; und ein Filterelement, das einen Fixierbereich aufweist, in dem es zwischen dem Rohrstutzen und der Fixierkomponente fixiert ist, wobei außerhalb des Fixierbereichs zwischen dem Filterelement und dem Rohrstutzen ein Luftspalt angeordnet ist, dadurch gekennzeichnet, dass die Fixierkomponente ein Teil des Rohrstutzens ist, wobei der Rohrstutzen in einem Endbereich eine Umbiegung aufweist und das Filterelement im Bereich der Umbiegung an dem Rohrstutzen fixiert ist.

Die mit der Erfindung erzielten Vorteile liegen darin, dass das Filterelement aufgrund des vorhandenen Luftspalts die Möglichkeit hat, sich bei Temperaturänderungen auszudehnen und wieder zusammenzuziehen. Die Gefahr von Beschädigungen des Filterelements aufgrund übermäßiger thermischer Beanspruchung ist dadurch erheblich verringert.

Der Endbereich des Rohrstutzens ist radial nach innen gebogen, vorzugsweise durch Bördeln oder Falzen. Bevorzugt ist der Endbereich des Rohrstutzens derart nach innen gebogen, dass er im Schnittbild eine etwa halbkreisartige Form aufweist. Das Filterelement ist zwischen der Fixierkomponente und dem Rohrstutzen angeordnet. Dadurch kann vorteilhafterweise auf ein zusätzliches Bauteil zur Fixierung des Filterelements verzichtet werden. Auch eine axiale Positionierung des Filterelements lässt sich erleichtern bzw. verbessern, da der gebogene Endbereich des Rohrstutzens selbst als eine axiale Abstützung fungieren kann. Das Bördeln oder Falzen stellt darüber hinaus eine Metallverarbeitungstechnik dar, die technisch ausgereift, gut bekannt und vergleichsweise einfach umzusetzen ist.

Insbesondere in Verbindung mit einer Weiterbildung des erfindungsgemäßen Filters, bei der der Luftspalt auf einer einem Endbereich des Rohrstutzens abgewandten Seite angeordnet ist, ergibt sich ein weiterer gewichtiger Vorteil. Bei gattungsgemäßen Filtern nach dem Stand der Technik ist das Filterelement regelmäßig an einer Stirnseite der Rohrleitung bzw. des Rohrstutzens angeordnet. Dadurch kann es leicht zu schädigenden mechanischen Einwirkungen von außen auf das Filterelement kommen. Durch die genannte Weiterbildung des erfindungsgemäßen Filters ist das Filterelement besser vor solchen Schadenseinwirkungen geschützt.

Vorzugsweise überdeckt das Filterelement in einem Freibereich, in dem es nicht an dem Rohrstutzen fixiert ist, also in einem Bereich außerhalb des Fixierbereichs, einen lichten Querschnitt des Rohrstutzens. Dabei ist es besonders vorteilhaft, wenn ein axialer Abstand zwischen dem Filterelement und dem Endbereich des Rohrstutzens in dem Freibereich größer ist als in dem Fixierbereich. Dies kann bedeuten, dass das Filterelement - bezogen auf den Endbereich des Rohrstutzens - konkav bzw. nach innen, in den Rohrstutzen hinein, gebogen angeordnet ist. Durch die flächige Überdeckung des lichten Querschnitts des Rohrstutzens erhöht sich die Effizienz des Filters. Der größere axiale Abstand zwischen dem Filterelement und dem Endbereich des Rohrstutzens in dem Freibereich gestaltet sich dahingehend von Vorteil, dass die Wahrscheinlichkeit einer schädigenden mechanischen Einwirkung von außen auf das Filterelement deutlich verringert ist. Die gebogene Anordnung bzw. Ausgestaltung des Filterelements kann sich außerdem günstig auf die am durchströmten Filterelement angreifenden Kräfte auswirken.

In einer vorteilhaften Weiterbildung der Erfindung weisen in dem Fixierbereich die Fixierkomponente, das Filterelement und der Endbereich des Rohrstutzens wenigstens abschnittsweise jeweils eine parallele Erstreckungskomponente auf. In anderen Worten verlaufen in dem Fixierbereich Fixierkomponente, Filterelement und Endbereich des Rohrstutzens in etwa parallel zueinander. Dabei können die drei genannten Komponenten in dem Fixierbereich auch parallel zu einer Längsachse des Rohrstutzens verlaufen. Durch die parallele Anordnung der drei Komponenten lässt sich auf der einen Seite die Dichtheit zwischen den Komponenten in dem Fixierbereich erhöhen. Auf der anderen Seite wird dadurch auch eine Verbindung der genannten drei Komponenten erleichtert.

Besonders bevorzugt ist der Endbereich in Form einer Spirale oder Schneckenlinie mehrfach nach innen gebogen. Dadurch ist die Fixierung des Filterelements einfacher umsetzbar. Insbesondere kann sowohl bei der halbkreisförmigen Biegung des Endbereichs des Rohrstutzens als auch bei der schneckenlinienförmigen Biegung auf eine stoffschlüssige Verbindung und/oder ein radiales Verpressen von Filterelement und Fixierkomponente bzw. Rohrstutzen verzichtet werden, was die Verbindung weiter vereinfacht.

Zur Erhöhung der Stabilität und Ausfallsicherheit einer Verbindung von Rohrteil, Filterelement und Rohrstutzen können alle drei Komponenten miteinander verschweißt sein. Alternativ ist es auch möglich, dass nur das Rohrteil und der Rohrstutzen über eine Schweißverbindung miteinander verfügen. Vorteilhafterweise kann bei dieser Weiterbildung des erfindungsgemäßen Filters auf eine zusätzliche Komponente zur Fixierung des Filterelementes verzichtet werden. Auch eine Montage des Filterelements ist bei dieser Weiterbildung besonders einfach.

Bevorzugt weisen in dem Fixierbereich die Fixierkomponente, das Filterelement und der Endbereich des Rohrstutzens zumindest in Teilbereichen einen von Null verschiedenen Neigungswinkel, bezogen auf die Längsachse des Rohrstutzens, auf. Durch den von Null verschiedenen Neigungswinkel der genannten Komponenten lässt sich eine kraftschlüssige Verbindung der drei Komponenten miteinander, insbesondere durch Selbsthemmung, auf eine einfache Art und Weise realisieren. Bevorzugt weist dabei der Endbereich des Rohrstutzens eine radiale Aufweitung auf. Durch die radiale Aufweitung des Rohrstutzens wird ein lichter Querschnitt des Rohrstutzens in dem Endbereich des Rohrstutzens möglichst großflächig ausgestaltet, so dass ein Strömungsquerschnitt für ein Fluid, das in der Rohrleitung geführt wird, vergrößert wird.

In einer Weiterbildung des erfindungsgemäßen Filters weist der Rohrstutzen eine Querschnittsänderung auf. Dadurch kann der Luftspalt vorteilhafterweise vergrößert werden, insbesondere um dem Filterelement mehr Raum für dessen Expansions- und Kompressionsvorgänge zu geben. Im Zuge einer möglichen Verwendung des Rohrstutzens als ein Flammrohr, das innerhalb eines Balges angeordnet ist, wirkt sich die Querschnittsänderung zudem positiv auf die Beweglichkeit des Balges aus. Besonders vorteilhaft kann die Querschnittsänderung auch für den Fall sein, dass der Rohrstutzen mit einem komplexen Leitungssystem verbunden wird. Durch die unterschiedlichen Querschnitte von Endbereich des Rohrstutzens und dem übrigen Rohrstutzen kann das Filterelement von möglicherweise schädigenden thermischen Einflüssen, insbesondere einer Verschweißung des Rohrstutzens, besser geschützt werden.

Bei einer vorteilhaften Weiterbildung des Filters sind Fixierkomponente, Filterelement und Rohrstutzen in einem metallischen Werkstoff, insbesondere Stahl, vorzugsweise Edelstahl, ausgebildet. Edelstahl genügt hohen Anforderungen bezüglich der thermischen Stabilität und ist darüber hinaus formstabil, gut verarbeitbar und reagiert in der Regel nicht mit einem Fluid, welches in der Rohrleitung geführt wird.

Das Filterelement kann ein- oder mehrlagig als Gewebe, Gestricke und/oder Gewirk, vorzugsweise aus Metalldrähten, gefertigt sein. Zusätzlich kann das Filterelement auf einem Stützgitter aus Metall, insbesondere einem Lochblech, angeordnet sein. Das Filter kann auch mit einer katalytischen Beschichtung versehen sein, wie sie in EP 2 585 703 B1 beschrieben ist. Dies trägt zu einer verbesserten Wirksamkeit des Filters bei.

Ein anderer Aspekt der Erfindung betrifft ein Verfahren zum Einsetzen eines Filterelements in eine Rohrleitung, welche Rohrleitung umfasst: einen Rohrstutzen; eine in einem Endbereich des Rohrstutzens angeordnete und von dem Rohrstutzen wenigstens teilweise umschlossene Fixierkomponente; und ein Filterelement, das einen Fixierbereich aufweist, in dem es zwischen dem Rohrstutzen und der Fixierkomponente fixiert ist; welches Verfahren sich dadurch auszeichnet, dass eine Fixierkomponente durch ein Umbiegen des Endbereichs des Rohrstutzens geschaffen wird, so dass die Fixierkomponente das Filterelement in dem Fixierbereich zwischen sich und dem Endbereich des Rohrstutzens festlegt.

Dieses Verfahren gestaltet sich besonders vorteilhaft, da es ohne den Einsatz eines speziellen Werkzeugs durchgeführt wird und zu einer effizienten Fixierung des Filterelements führt, ohne dass notwendigerweise geschweißt oder zusätzlich verpresst werden müsste, was sich zeit- und kostenmäßig günstig auswirkt. Die Fixierkomponente, das Filterelement und der Endbereich des Rohrstutzens können nach dem Schaffen der Fixierkomponente auch durch wenigstens eine stoffschlüssige Verbindung, vorzugsweise in Form wenigstens eines Schweißpunktes oder einer (durchgängigen) Schweißnaht, miteinander verbunden werden. Durch die stoffschlüssige Verbindung erhöht sich, wie zuvor bereits erwähnt, eine Dichtheit der Verbindung der drei Komponenten. Weiterhin wird durch die stoffschlüssige Verbindung eine axiale Lage der Fixierkomponente relativ zu dem Filterelement und dem Endbereich des Rohrstutzens festgelegt. Alternativ oder zusätzlich zu der stoffschlüssigen Verbindung können Fixierkomponente, Filterelement und Endbereich des Rohrstutzens auch miteinander verpresst werden. Eine Verbindung der drei Komponenten kann aber auch durch weitere mechanische Umformarbeiten, durch elektromagnetische Einwirkung (Magnetumformung) oder mittels eines anderen geeigneten Verfahrens bewirkt werden.

Weitere Vorteile und Eigenschaften der Erfindung ergeben sich aus der folgenden Beschreibung von Ausführungsbeispielen anhand der Zeichnung. Es zeigt:
- Fig. 1: ein illustratives, nicht erfindungsgemäßes Filter im Längsschnitt;
- Fig. 2: ein zweites illustratives, nicht erfindungsgemäßes Filter im Längsschnitt;
- Fig. 3: eine Ausführungsform des illustrativen, nicht erfindungsgemäßen Filters gemäß Fig. 2 im Querschnitt;
- Fig. 4: ein drittes illustratives, nicht erfindungsgemäßes Filter im Längsschnitt;
- Fig. 5: ein viertes illustratives, nicht erfindungsgemäßes Filter im Längsschnitt;
- Fig. 6: ein fünftes illustratives, nicht erfindungsgemäßes Filter im Längsschnitt;
- Fig. 7: ein erfindungsgemäßes Filter im Längsschnitt; und
- Fig. 8: eine Ausführungsform des erfindungsgemäßen Filters gemäß Fig. 7 im Querschnitt.

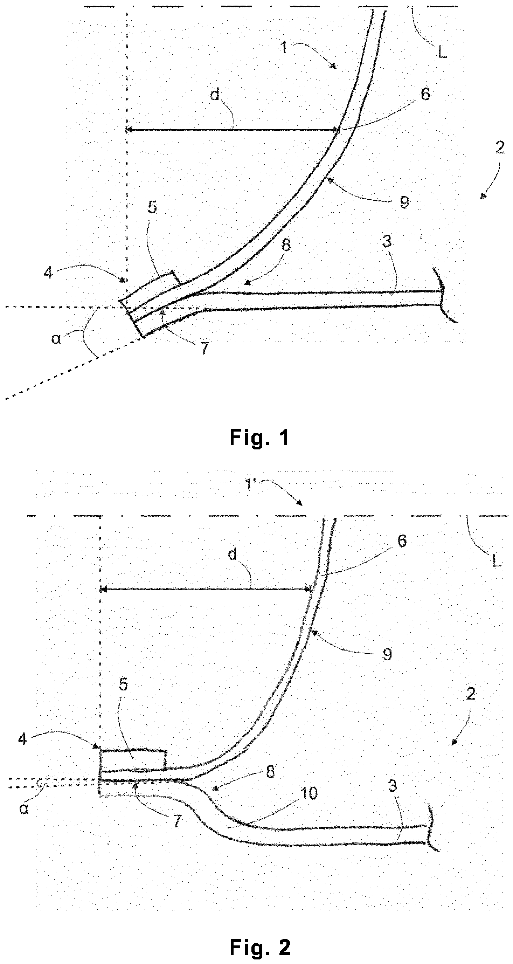

In Fig. 1 ist ein Längsschnitt durch ein illustratives, nicht erfindungsgemäßes Filter 1 gezeigt, welches Filter 1 einen endständigen Rohrstutzen 3 einer Rohrleitung 2 umfasst. Der Rohrstutzen 3 weist in einem Endbereich 4 eine radiale Aufweitung auf. Weiterhin weist der Filter 1 ein Filterelement 6 auf, das in einem Fixierbereich 7 zwischen einer Hülse 5 und dem Endbereich 4 des Rohrstutzens 3 festgelegt ist. Die Hülse 5, das Filterelement 6 und der Endbereich 4 des Rohrstutzens 3 verlaufen in dem Fixierbereich 7 zueinander in etwa parallel und gemeinsam unter einem Neigungswinkel a, der bezogen auf eine Längsachse L der Rohrleitung 2 bzw. des Rohrstutzens 3 bestimmt ist. In einem Freibereich 9, der von dem Fixierbereich 7 umgeben ist, überdeckt das Filterelement 6 einen lichten Querschnitt des Rohrstutzens 3. Durch die gezeigte Anordnung von Hülse 5, Filterelement 6 und Endbereich 4 des Rohrstutzens 3 in dem Fixierbereich 7 ist zwischen dem Filterelement 6 und dem Rohrstutzen 3 ein Luftspalt 8 ausgebildet. Dieser öffnet von dem Endbereich 4 des Rohrstutzens 3 weg in Richtung der weiteren Erstreckung der Rohrleitung 2 bzw. in Richtung der Längsachse L. In dem Freibereich 9 weist das Filterelement 6 einen Abstand d zu einer gedachten Ebene des Endbereichs 4 des Rohrstutzens 3 auf (Ebene gestrichelt dargestellt).

Der Abstand d ist in dem Freibereich 9 größer als in dem Fixierbereich 7. Hieraus ergibt sich, dass das Filterelement 6 in dem Freibereich 9, in dem es nicht fixiert ist, einen größeren Abstand d von dem freien Ende des Rohrstutzens 3 aufweist als nach dem Stand der Technik bekannt ist. Damit ist es besser vor schädigenden mechanischen Einwirkungen von außen geschützt. Durch den Luftspalt 8 hat das Filterelement 6 die Möglichkeit, auf schwankende Temperaturbedingungen mit einer Ausdehnung bzw. Einziehung seines Filtergewebes zu reagieren. Dadurch wird die Lebensdauer und die Standzeit des Filterelements 6 deutlich erhöht.

Das Filterelement 6 weist in dem Freibereich 9 eine konkave Wölbung in Richtung der Rohrleitung 2 bzw. der Längsachse L, d.h. weg von dem Endbereich 4 des Rohrstutzens 3, auf. Durch die Wölbung des Filterelements 6 erhöht sich auf der einen Seite dessen Expansions- und Kompressionsvermögen bei Temperaturschwankungen, was sich vorteilhaft auf die Lebensdauer des Filterelements 6 auswirkt. Auf der anderen Seite ist der Abstand d in dem Freibereich 9 durch die konkave Wölbung nochmals deutlich größer als dies beispielweise bei einer möglichen ebenen Ausgestaltung des Filterelements 6 in dem Freibereich 9 der Fall wäre. Durch die konkave Wölbung erhöht sich demnach nochmals der Schutz des Filterelements 6 vor schädigender mechanischer Einwirkung. Zusätzlich wird durch die konkave Wölbung eine Wirkfläche des Filterelements 6 erhöht. Daneben wird auch ein Druckverlust eines in dem Rohrstutzen 3 geführten Fluides, der durch den Einsatz des Filterelementes 6 bedingt ist, verringert. Auch ein Zusetzverhalten des Filters 1 bzw. des Filterelements 6 wird dadurch positiv beeinflusst. Insgesamt wird die Filterwirkung des Filters 1 durch die konkave Wölbung des Filterelementes 6 verbessert.

Der Neigungswinkel α beträgt in vorliegendem Ausführungsbeispiel etwa 4,5 Grad. Dadurch lässt sich die Hülse 5 auf besonders einfache Art und Weise in einen Innenbereich des Rohrstutzens 3 hineinschieben, um durch Selbsthemmung eine Haltekraft auf das Filterelement 6 in dem Fixierbereich 7 bzw. den Endbereich des Rohrstutzens 3 auszuüben. Die Verbindung von Hülse 5, Filterelement 6 und Endbereich 4 des Rohrstutzens 3 kann zusätzlich zu der durch Selbsthemmung hervorgerufenen kraftschlüssigen Verbindung durch eine stoffschlüssige Verbindung, insbesondere eine Schweißnaht, ergänzt werden.

Die zueinander parallele Anordnung der Hülse 5, des Filterelements 6 und des Endbereichs 4 des Rohrstutzens 3 in dem Fixierbereich erleichtert die Verbindung der drei genannten Komponenten und gestaltet sich für die Festlegung des Filterelements 6 besonders vorteilhaft, da das Filterelement 6 nicht um irgendwelche Ecken oder Kanten gelegt werden muss, was bereits zu Beschädigungen führen könnte. Bereiche mit Oberflächenunebenheiten, insbesondere Graten, der Hülse 5 sind vorteilhafterweise auf der aus der Sicht des Filterelements 6 abliegenden, also innenliegenden Seite der Hülse 5 angeordnet. Damit lässt sich das Filterelement 6 vor einer mechanischen Beschädigung schützen. Eine Wandstärke der Hülse 5 ist vorliegend größer als eine Wandstärke des Endbereichs 4 des Rohrstutzens 3. Dies kann sich vorteilhaft bezüglich einer radialen Aufweitung der Hülse 5 und einer daraus resultierenden Verpressung von Hülse 5, Filterelement 6 und Endbereich 4 des Rohrstutzens 3 auswirken.

In Fig. 2 ist ein zweites illustratives, nicht erfindungsgemäßes Filter 1' in einem Längsschnitt dargestellt. Im Gegensatz zu Fig. 1 weist der Rohrstutzen 3 eine Querschnittsänderung 10 auf. Die Querschnittsänderung 10 ist so ausgebildet, dass der Endbereich 4 des Rohrstutzens 3 radial eingezogen ist. Die Hülse 5, das Filterelement 6 und der Endbereich 4 des Rohrstutzens 3 sind in dem Fixierbereich 7 in etwa parallel zueinander angeordnet. Die drei genannten Komponenten verlaufen unter einem gemeinsamen Neigungswinkel α in Bezug auf die Längsachse L der Rohrleitung 2 bzw. des Rohrstutzens 3.

Zwischen Filterelement 6 und Rohrstutzen 3 ist ein Luftspalt 8 angeordnet. In dem Freibereich 9 weist das Filterelement 6, wie in Fig. 1, eine konkave Wölbung weg von dem Endbereich 4 des Rohrstutzens 3 auf. Damit sind die zuvor bereits ausgeführten Vorteile verbunden.

Der Neigungswinkel α beträgt bei dem gezeigten Ausführungsbeispiel ca. 1,5 Grad nach außen weg von der Längsachse L. Ein von Null verschiedener Neigungswinkel α erleichtert das Einschieben der Hülse 5 und die Verbindung der Hülse 5 mit dem Filterelement 6 und dem Endbereich 4 des Rohrstutzens 3.

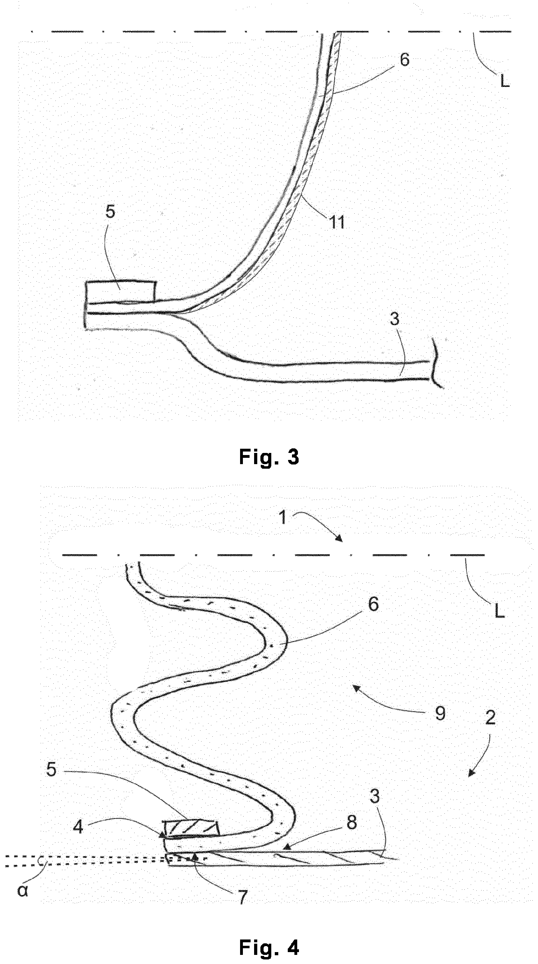

Das Filterelement 6 kann auch auf einem Stützgitter 11 angeordnet sein, welches in Fig. 3 dargestellt ist. Das Stützgitter 11 ist in Fig. 3 zwar in Verbindung mit einer Ausgestaltungsform des Rohrstutzens 3 gemäß Fig. 2 dargestellt, kann aber auch bei der Ausgestaltungsform gemäß Fig. 1 vorgesehen sein. Das Stützgitter 11 ist dabei von dem Endbereich 4 des Rohrstutzens 3 gesehen auf der abliegenden Seite des Filterelements 6 angeordnet. Das Stützgitter 11 kann dabei insbesondere aus einem metallenen Lochblech ausgebildet sein.

Figur 4 zeigt ein drittes illustratives, nicht erfindungsgemäßes Filter 1 in einem Längsschnitt. Im Gegensatz zu den Figuren 2 und 3 weist der Rohrstutzen 3 keine Querschnittsänderung auf. Das Filterelement 6 ist in dem Fixierbereich 7, wie in den Figuren 1 bis 3, radial zwischen einer Hülse 5, die als Fixierkomponente 5 fungiert, und dem Endbereich 4 des Rohrstutzens 3 fixiert. Zwischen Filterelement 6 und Rohrstutzen 3 befindet sich ein Luftspalt 8. In dem Freibereich 9, in dem das Filterelement 6 nicht fixiert ist, weist es im Gegensatz zu den Figuren 1 bis 3 eine im Längsschnitt wellenförmige Struktur auf. Hierdurch wird eine Wirkfläche des Filterelements 6 erhöht. Daneben wird auch ein Druckverlust eines in dem Rohrstutzen 3 geführten Fluides, der durch den Einsatz des Filterelementes 6 bedingt ist, durch die in Figur 4 dargestellte Ausgestaltungsform des Filters 1 verringert. Auch ein Zusetzverhalten des Filters 1 bzw. des Filterelements 6 wird dadurch positiv beeinflusst. Insgesamt wird die Filterwirkung des Filters 1 durch die in Figur 4 dargestellte Ausgestaltungsform des Filters 1 bzw. des Filterelementes 6 verbessert. Die wellenförmige Struktur des Filterelementes 6 in dem Freibereich 9 kann dabei auch andere Ausgestaltungsformen als die in Figur 4 dargestellte aufweisen.

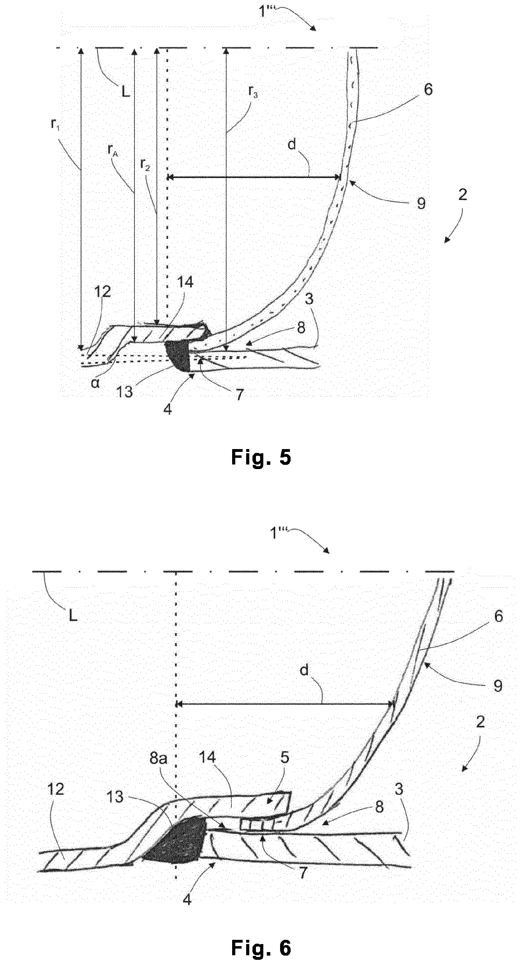

In Figur 5 ist ein viertes illustratives, nicht erfindungsgemäßes Filter 1'" in einem Längsschnitt dargestellt. Das illustrative, nicht erfindungsgemäße Filter 1'" umfasst neben dem endständigen Rohrstutzen 3 und dem Filterelement 6 ein Rohrteil 12. Zwischen Filterelement 6 und Rohrstutzen 3 befindet sich ein Luftspalt 8. Das Rohrteil 12 weist einen endständigen Bereich 14 mit einer radialen Querschnittsverjüngung auf. In einem Übergangsbereich zu dem endständigen Bereich 14 mit der radialen Querschnittsverjüngung ist das Rohrteil 12 radial nach innen gekrümmt.

Ein Innenradius r₁ des Rohrteils 12 in dem nicht verjüngten Bereich ist in etwa betragsmäßig gleich einem Innenradius r₃ des Rohrstutzens 3. Ein Innenradius r₂ im Bereich der radialen Querschnittsverjüngung des Rohrteils 12 ist kleiner als der Innenradius r₃ des Rohrstutzens 3. Darum entspricht ein Außenradius r_{A} im Bereich der Querschnittsverjüngung in etwa dem Innenradius r₃ des Rohrstutzens 3 abzüglich einer Dicke des Filterelementes 6. Der Neigungswinkel α des Rohrstutzens 3 beträgt bei dem gezeigten Ausführungsbeispiel ca. 1,5 Grad nach außen weg von der Längsachse L. Ein von Null verschiedener Neigungswinkel α erleichtert das Einschieben des Rohrteils 12.

Ein endständiger Teil des Bereichs 14 mit der radialen Querschnittsverjüngung ist innerhalb des Endbereichs 4 des Rohrstutzens 3 angeordnet. Das Filterelement 6 ist in dem Fixierbereich 7 zwischen dem Bereich 14 mit der radialen Querschnittsverjüngung des Rohrteils 12 und dem Endbereich 4 des Rohrstutzens 3 fixiert. Der Bereich 14 mit der radialen Querschnittsverjüngung stellt demnach die Fixierkomponente 5 dar. Dabei schließt das Filterelement 6 in Richtung des Rohrteils 12 axial bündig mit dem Endbereich 4 des Rohrstutzens 3 ab. Die Struktur des Filterelementes 6 in dem Freibereich 9 kann auch andere Ausgestaltungsformen als die in Figur 5 dargestellte aufweisen, insbesondere eine Wellenstruktur gemäß Figur 4.

Der Endbereich 4 des Rohrstutzens 3, das Filterelement 6 und der Bereich 14 mit der radialen Querschnittsverjüngung des Rohrteils 12 sind mit einer außen liegenden Schweißnaht 13 miteinander verbunden. Hierdurch wird eine Ausfallsicherheit und eine Gasdichtheit der Verbindung 13 von Rohrteil 12 und Rohrstutzen 3 erhöht. Es liegt im Rahmen der Erfindung, zusätzlich oder alternativ andere Arten der Verbindung der drei Komponenten vorzusehen. Beispielsweise sei auf ein Verlöten oder ein Verpressen der drei Komponenten hingewiesen.

Alternativ können aber auch nur der Endbereich 4 des Rohrstutzens 3 und der Bereich 14 der radialen Querschnittsverjüngung des Rohrteils 12 miteinander verbunden sein, wie es Figur 6 zeigt. Auch in Figur 6 handelt es sich bei der Verbindung 13 um eine Schweißnaht, ohne dass die Erfindung darauf beschränkt ist. Im Gegensatz zu Figur 5 schließt das Filterelement 6 in Richtung des Rohrteils 12 nicht axial bündig mit dem Endbereich 4 des Rohrstutzens 3 ab, sondern ist axial weiter zurückgezogen als der Endbereich 4 des Rohrstutzens 3. Der Endbereich 4 des Rohrstutzens 3 ist direkt mit dem Rohrteil 12 mittels der Schweißnaht 13 verbunden. Das Filterelement 6 ist wie in Figur 5 radial zwischen einem Teil des Bereichs 14 der radialen Querschnittsverjüngung des Rohrteils 12 und dem Endbereich 4 des Rohrstutzens 3 fixiert.

Durch den im vorherigen Absatz erläuterten axialen Versatz des Filterelementes 6 und des Endbereichs 4 des Rohrstutzens 3 befindet sich zwischen dem Endbereich 4 des Rohrstutzens 3 und dem Bereich 14 der radialen Querschnittsverjüngung des Rohrteils 12 ein zusätzlicher Luftspalt 8a. Durch diesen Luftspalt 8a hat das Filterelement 6 einen axialen Freiraum, um auf Temperaturschwankungen mit Kontraktion oder Expansion zu reagieren. Auch ist das Filterelement 6 vor schädigenden Einflüssen beim Schaffen der Verbindung 13 geschützt. Die Struktur des Filterelementes 6 in dem Freibereich 9 kann auch andere Ausgestaltungsformen als die in Figur 6 dargestellte aufweisen, insbesondere eine Wellenstruktur gemäß Figur 4.

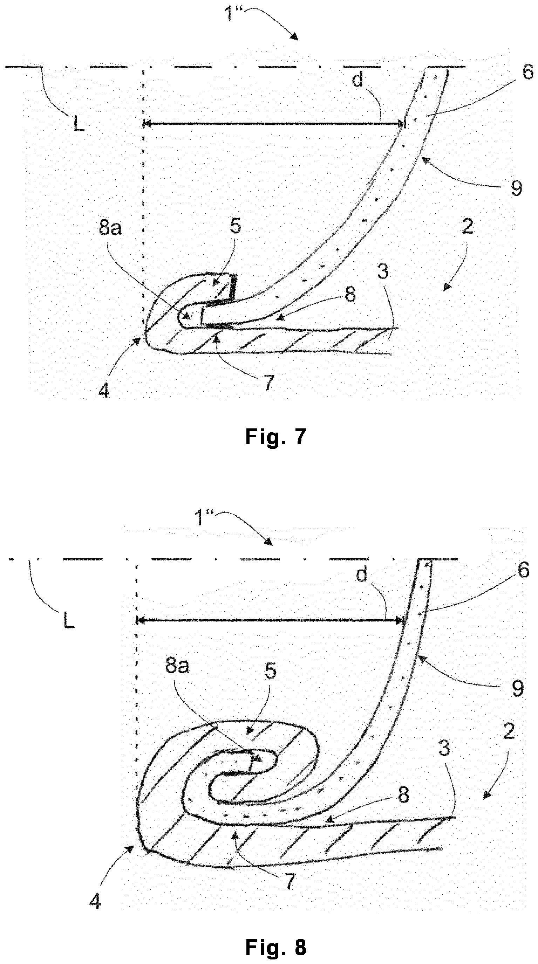

Eine erfindungsgemäßes Filter 1" ist in Figur 7 dargestellt. Das erfindungsgemäße Filter 1" umfasst einen Rohrstutzen 3 und ein Filterelement 6. Zwischen Filterelement 6 und Rohrstutzen 3 befindet sich ein Luftspalt 8. Der Rohrstutzen 3 ist in dem Endbereich 4 radial um etwa 180 Winkelgrade nach innen gebogen. Die Biegung ist vorteilhafterweise durch Bördeln oder Falzen hergestellt worden. In dem Längsschnitt hat der Endbereich 4 des Rohrstutzens 3 demnach die Form des Buchstabens U oder eines angenäherten Halbkreises. Zwischen einem radial nach innen gebogenen Teil des Endbereichs 4 des Rohrstutzens 3 und dem Rohrstutzen 3 ist das Filterelement 6 radial fixiert. Der nach innen gebogene Teil des Endbereichs 4 fungiert dabei als Fixierkomponente 5. Vorteilhafterweise kann dabei auf zusätzliche Bauteile, wie beispielsweise eine Hülse, verzichtet werden.

Zwischen dem Filterelement 6 und dem nach innen gebogenen Endbereich 4 des Rohrstutzens 3 befindet sich ein zusätzlicher Luftspalt 8a. Durch diesen Luftspalt 8a hat das Filterelement 6 einen axialen Freiraum, um auf Temperaturschwankungen mit Kontraktion oder Expansion zu reagieren. Die Struktur des Filterelementes 6 in dem Freibereich 9 kann auch andere Ausgestaltungsformen als die in Figur 7 dargestellte aufweisen, insbesondere eine Wellenstruktur gemäß Figur 4.

Figur 8 zeigt eine Variante der erfindungsgemäßen Ausgestaltungsform aus Figur 7. Der Endbereich 4 des Rohrstutzens 3 ist derart radial nach innen gebogen, dass er in dem Längsschnitt die Form eines Schneckenhauses oder einer Spirale bzw. Schneckenlinie aufweist. Das Filterelement 6 ist in einem inneren Bereich des Schneckenhauses durch den nach innen gebogenen Endbereich 4 des Rohrstutzens 3 radial und axial fixiert. Es weist in Figur 8 endständig eine Biegung von in etwa 180 Winkelgraden radial nach innen auf. Die Biegung ist wie in Figur 7 vorteilhafterweise durch Bördeln oder Falzen hergestellt worden. Ein zusätzlicher Luftspalt 8a zwischen Filterelement 6 und dem gebogenen Endbereich 4 des Rohrstutzens 3 gibt dem Filterelement 6, wie zuvor anhand der Figuren 6 und 7 bereits erläutert, einen axialen Freiraum, um auf Temperaturschwankungen mit Kontraktion oder Expansion zu reagieren.

Das in den Fig. 7 und 8 dargestellte Filter 1, 1', 1", 1'" ist zum Einsetzen in eine Rohrleitung 2 mit einem kreisförmigen Querschnitt für die Abgasrückführung bei einem Kfz-Verbrennungsmotor ausgelegt. Dementsprechend ist auch der Rohrstutzen 3 (und ggf. das Rohrteil 12) im Wesentlichen kreiszylindrisch ausgebildet. Es sind jedoch auch andere Formen, insbesondere andere Querschnittsformen, im Rahmen der vorliegenden Erfindung realisierbar.

## Patentansprüche

1. Filter (1, 1', 1", 1"') zum Einsetzen in eine Rohrleitung (2), umfassend:
einen Rohrstutzen (3);
eine in einem Endbereich (4) des Rohrstutzens (3) angeordnete und von dem Rohrstutzen (3) wenigstens teilweise umschlossene Fixierkomponente (5); und
ein Filterelement (6), das einen Fixierbereich (7) aufweist, in dem es zwischen dem Rohrstutzen (3) und der Fixierkomponente (5) fixiert ist, wobei außerhalb des Fixierbereichs (7) zwischen dem Filterelement (6) und dem Rohrstutzen (3) ein Luftspalt (8) angeordnet ist,
**dadurch gekennzeichnet, dass**,
die Fixierkomponente (5) ein Teil des Rohrstutzens (3) ist, wobei der Rohrstutzen (3) in einem Endbereich (4) eine Umbiegung aufweist und das Filterelement (6) im Bereich der Umbiegung an dem Rohrstutzen (3) fixiert ist.

2. Filter (1, 1', 1", 1"') nach Anspruch 1, bei dem der Luftspalt (8) auf einer dem Endbereich (4) des Rohrstutzens (3) abgewandten Seite angeordnet ist.

3. Filter (1, 1', 1", 1"') nach Anspruch 1 oder 2, bei dem das Filterelement (6) in einem Freibereich (9) einen lichten Querschnitt des Rohrstutzens (3) überdeckt.

4. Filter (1, 1', 1", 1"') nach Anspruch 3, bei dem ein axialer Abstand (d) zwischen dem Filterelement (6) und dem Endbereich (4) des Rohrstutzens (3) in dem Freibereich (9) größer ist als in dem Fixierbereich (7).

5. Filter (1, 1', 1", 1"') nach einem der vorangegangenen Ansprüche, bei dem in dem Fixierbereich (7) die Fixierkomponente (5), das Filterelement (6) und der Endbereich (4) des Rohrstutzens (3) wenigstens abschnittsweise eine parallele Erstreckungskomponente aufweisen.

6. Filter (1, 1', 1", 1"') nach einem der vorangegangenen Ansprüche, bei dem in dem Fixierbereich (7) die Fixierkomponente (5), das Filterelement (6) und der Endbereich (4) des Rohrstutzens (3) zumindest in Teilbereichen einen von Null verschiedenen Neigungswinkel (α), bezogen auf eine Längsachse (L) des Rohrstutzens (3), aufweisen, wobei vorzugsweise der Endbereich (4) des Rohrstutzens (3) eine radiale Aufweitung aufweist.

7. Filter (1') nach einem der vorangegangenen Ansprüche, bei dem der Rohrstutzen (3) eine Querschnittsänderung (10) aufweist.

8. Filter (1, 1') nach einem der vorangegangenen Ansprüche, bei dem zwischen Fixierkomponente (5), Filterelement (6) und Rohrstutzen (3) wenigstens eine stoffschlüssige Verbindung vorgesehen ist, vorzugsweise in Form wenigstens eines Schweißpunktes.

9. Filter (1, 1') nach einem der vorangegangenen Ansprüche, bei dem die Fixierkomponente (5), das Filterelement (6) und der Rohrstutzen (3) in einem metallischen Werkstoff, insbesondere Stahl, vorzugweise Edelstahl, ausgebildet sind.

10. Filter (1, 1') nach einem der vorangegangenen Ansprüche, bei dem das Filterelement (6) ein- oder mehrlagig als Gewebe, Gestricke und/oder Gewirk, vorzugsweise aus Metalldrähten, gefertigt ist, wobei höchst vorzugsweise das Filterelement (6) auf einem Stützgitter (11) aus Metall, insbesondere einem Lochblech, angeordnet ist.

11. Verfahren zum Einsetzen eines Filterelements (6) in eine Rohrleitung (2), die Rohrleitung (2) umfassend:
einen Rohrstutzen (3);
eine in einem Endbereich (4) des Rohrstutzens (3) angeordnete und von dem Rohrstutzen (3) wenigstens teilweise umschlossene Fixierkomponente (5); und
ein Filterelement (6), das einen Fixierbereich (7) aufweist, in dem es zwischen dem Rohrstutzen (3) und der Fixierkomponente (5) fixiert ist,
wobei außerhalb des Fixierbereichs (7) zwischen dem Filterelement (6) und dem Rohrstutzen (3) ein Luftspalt (8) ausgebildet wird,
**dadurch gekennzeichnet, dass**
eine Fixierkomponente (5) durch ein Umbiegen des Endbereichs (4) des Rohrstutzens (3) geschaffen wird, so dass die Fixierkomponente (5) das Filterelement (6) in dem Fixierbereich (7) zwischen sich und dem Endbereich (4) des Rohrstutzens (3) festlegt.

12. Verfahren nach Anspruch 11, bei dem nach dem Schaffen der Fixierkomponente (5) die Fixierkomponente (5), das Filterelement (6) und der Endbereich (4) des Rohrstutzens (3) durch wenigstens eine stoffschlüssige Verbindung, vorzugsweise in Form wenigstens eines Schweißpunktes oder in Form einer bevorzugt durchgängigen Schweißnaht, miteinander verbunden werden.

## Claims

1. Filter (1, 1', 1", 1"') for insertion into a pipeline (2), comprising:
a pipe neck (3);
a fixing component (5) which is arranged in an end region (4) of the pipe neck (3) and is at least partly enclosed by the pipe neck (3); and
a filter element (6) having a fixing region (7) in which it is fixed between the pipe neck (3) and the fixing component (5), with an air gap (8) being arranged between the filter element (6) and the pipe neck (3) outside of the fixing region (7),
**characterised in that**
the fixing component (5) is part of the pipe neck (3), the pipe neck (3) having a bent-over portion in an end region (4) and the filter element (6) being fixed to the pipe neck (3) in the region of the bent-over portion.

2. Filter (1, 1', 1", 1'") according to claim 1, wherein the air gap (8) is arranged on a side remote from the end region (4) of the pipe neck (3).

3. Filter (1, 1', 1", 1'") according to claim 1 or 2, wherein the filter element (6), in a free region (9), covers an internal cross-section of the pipe neck (3).

4. Filter (1, 1', 1", 1"') according to claim 3, wherein an axial spacing (d) between the filter element (6) and the end region (4) of the pipe neck (3) is larger in the free region (9) than in the fixing region (7).

5. Filter (1, 1', 1", 1"') according to any one of the preceding claims, wherein, in the fixing region (7), the fixing component (5), the filter element (6) and the end region (4) of the pipe neck (3) have, at least in part, a component that extends in parallel.

6. Filter (1, 1', 1", 1"') according to any one of the preceding claims, wherein, in the fixing region (7), the fixing component (5), the filter element (6) and the end region (4) of the pipe neck (3) have, at least in sub-regions, an angle of inclination (α) with respect to a longitudinal axis (L) of the pipe neck (3) that is other than zero, the end region (4) of the pipe neck (3) preferably having a radially widened portion.

7. Filter (1') according to any one of the preceding claims, wherein the pipe neck (3) has a change in cross-section (10).

8. Filter (1, 1') according to any one of the preceding claims, wherein between the fixing component (5), the filter element (6) and the pipe neck (3) there is provided at least one bonded connection, preferably in the form of at least one spot weld.

9. Filter (1, 1') according to any one of the preceding claims, wherein the fixing component (5), the filter element (6) and the pipe neck (3) are formed in a metallic material, especially steel, preferably special steel.

10. Filter (1, 1') according to any one of the preceding claims, wherein the filter element (6) is of single-layered or multi-layered construction in the form of a woven material, weft-knitted material and/or warp-knitted material, preferably made of metal wires, the filter element (6) most preferably being arranged on a support grid (11) made of metal, especially a perforated metal sheet.

11. Method for inserting a filter element (6) into a pipeline (2), the pipeline (2) comprising:
a pipe neck (3);
a fixing component (5) which is arranged in an end region (4) of the pipe neck (3) and is at least partly enclosed by the pipe neck (3), and
a filter element (6) having a fixing region (7) in which it is fixed between the pipe neck (3) and the fixing component (5), with an air gap (8) being formed between the filter element (6) and the pipe neck (3) outside of the fixing region (7),
**characterised in that**
a fixing component (5) is created by bending over the end region (4) of the pipe neck (3), so that the fixing component (5) fixes the filter element (6) in place in the fixing region (7) between itself and the end region (4) of the pipe neck (3).

12. Method according to claim 11, wherein, after the creation of the fixing component (5), the fixing component (5), the filter element (6) and the end region (4) of the pipe neck (3) are joined to one another by at least one bonded connection, preferably in the form of at least one spot weld or in the form of a preferably continuous welded seam.

## Revendications

1. Filtre (1, 1', 1", 1"') destiné à être intégré dans un conduit tubulaire (2) comprenant :
un embout tubulaire (3) ;
un élément structurel de blocage (5), logé dans une zone d'extrémité (4) de l'embout tubulaire (3) et ceinturé, au moins en partie, par ledit embout tubulaire (3) ; et
un élément filtrant (6) muni d'une zone d'assujettissement (7) dans laquelle il est consigné à demeure entre ledit embout tubulaire (3) et ledit élément structurel de blocage (5), un espace interstitiel (8) étant réservé, à l'extérieur de ladite zone d'assujettissement (7), entre ledit élément filtrant (6) et ledit embout tubulaire (3),
**caractérisé par le fait que**
l'élément structurel de blocage (5) fait partie intégrante de l'embout tubulaire (3), sachant que ledit embout tubulaire (3) est pourvu d'un cintrage dans une zone d'extrémité (4) et que l'élément filtrant (6) est consigné à demeure, sur ledit embout tubulaire (3), dans la région dudit cintrage.

2. Filtre (1, 1', 1", 1"') selon la revendication 1, dans lequel l'espace interstitiel (8) est situé sur un côté tourné à l'opposé de la zone d'extrémité (4) de l'embout tubulaire (3).

3. Filtre (1, 1', 1", 1"') selon la revendication 1 ou 2, dans lequel l'élément filtrant (6) coiffe une section transversale intérieure de l'embout tubulaire (3) dans une zone libre (9).

4. Filtre (1, 1', 1", 1"') selon la revendication 3, dans lequel une distance axiale (d) entre l'élément filtrant (6) et la zone d'extrémité (4) de l'embout tubulaire (3) est plus grande, dans la zone libre (9), que dans la zone d'assujettissement (7).

5. Filtre (1, 1', 1", 1"') selon l'une des revendications précédentes, dans lequel l'élément structurel de blocage (5), l'élément filtrant (6) et la zone d'extrémité (4) de l'embout tubulaire (3) présentent, au moins par tronçons, une composante d'étendue parallèle dans la zone d'assujettissement (7).

6. Filtre (1, 1', 1", 1"') selon l'une des revendications précédentes, dans lequel l'élément structurel de blocage (5), l'élément filtrant (6) et la zone d'extrémité (4) de l'embout tubulaire (3) présentent dans la zone d'assujettissement (7), au moins dans des régions partielles, un angle d'inclinaison (α) différant de zéro par rapport à un axe longitudinal (L) dudit embout tubulaire (3), ladite zone d'extrémité (4) dudit embout tubulaire (3) étant préférentiellement pourvue d'un renflement radial.

7. Filtre (1') selon l'une des revendications précédentes, dans lequel l'embout tubulaire (3) comporte une modification de section transversale (10).

8. Filtre (1, 1') selon l'une des revendications précédentes, dans lequel au moins une liaison par solidarisation matérielle, revêtant de préférence la forme d'au moins un point de soudure, est prévue entre l'élément structurel de blocage (5), l'élément filtrant (6) et l'embout tubulaire (3).

9. Filtre (1, 1') selon l'une des revendications précédentes, dans lequel l'élément structurel de blocage (5), l'élément filtrant (6) et l'embout tubulaire (3) sont réalisés en un matériau métallique, notamment en acier, de préférence en acier fin.

10. Filtre (1, 1') selon l'une des revendications précédentes, dans lequel l'élément filtrant (6) est produit, en une ou plusieurs couches(s), sous la forme d'un tissu, d'une structure tricotée et/ou d'une structure maillée, de préférence en des fils métalliques, ledit élément filtrant (6) étant disposé, avec préférence maximale, sur un treillage d'appui (11) en métal, en particulier sur une tôle perforée.

11. Procédé d'intégration d'un élément filtrant (6) dans un conduit tubulaire (2), lequel conduit tubulaire (2) comprend :
un embout tubulaire (3) ;
un élément structurel de blocage (5), logé dans une zone d'extrémité (4) de l'embout tubulaire (3) et ceinturé, au moins en partie, par ledit embout tubulaire (3), et
un élément filtrant (6) muni d'une zone d'assujettissement (7) dans laquelle il est consigné à demeure entre ledit embout tubulaire (3) et ledit élément structurel de blocage (5),
un espace interstitiel (8) étant réservé, à l'extérieur de ladite zone d'assujettissement (7), entre ledit élément filtrant (6) et ledit embout tubulaire (3),
**caractérisé par le fait**
**qu'**un élément structurel de blocage (5) est créé par un cintrage de la zone d'extrémité (4) de l'embout tubulaire (3), de façon telle que ledit élément structurel de blocage (5) arrête fermement l'élément filtrant (6), dans la zone d'assujettissement (7), entre lui-même et ladite zone d'extrémité (4) dudit embout tubulaire (3).

12. Procédé selon la revendication 11, dans lequel, à l'issue de la création de l'élément structurel de blocage (5), ledit élément structurel de blocage (5), l'élément filtrant (6) et la zone d'extrémité (4) de l'embout tubulaire (3) sont reliés mutuellement par au moins une liaison par solidarisation matérielle revêtant, de préférence, la forme d'au moins un point de soudure ou la forme d'un cordon de soudure préférentiellement ininterrompu.
